Europäisches Patentamt

European Patent Office

Office européen des brevets

(11) Veröffentlichungsnummer: **0 060 828**
**A2**

(12) # EUROPÄISCHE PATENTANMELDUNG

(21) Anmeldenummer: **82890033.2**

(22) Anmeldetag: **03.03.82**

(51) Int. Cl.³: **A 01 G 9/14,** A 01 G 31/02

(30) Priorität: **12.03.81 AT 1130/81**

(43) Veröffentlichungstag der Anmeldung: **22.09.82**
**Patentblatt 82/38**

(84) Benannte Vertragsstaaten: **CH DE FR GB LI NL SE**

(71) Anmelder: **VOEST-ALPINE Aktiengesellschaft, Werksgelände, A-4010 Linz (AT)**

(72) Erfinder: **Die Erfinder haben auf ihre Nennung verzichtet**

(74) Vertreter: **Wolfram, Gustav, Dipl.-Ing., Schwindgasse 7 P.O. Box 205, A-1041 Wien (AT)**

(54) **Gewächshaus.**

(57) Bei einem Gewächshaus sind die Behälter (8) zur Aufnahme von sich entwickelnden Organismen entlang meanderförmiger Bahnen geführt.

Damit sich die die Behälter fördernden Einrichtungen nur über einen geringen Bruchteil des von den Behältern (8) zurückgelegten Weges erstrecken, ist eine Mehrzahl im vertikalen Abstand (5) voneinander angeordneter, quer zur Höhenerstreckung des Gewächshauses verlaufender ortsfester Führungen (6, 7) für die Behälter (8) vorgesehen, wobei die Enden (12) jeweils zweier übereinander angeordneter Führungen (6, 7) mit die Behälter in vertikaler Richtung von einer Führung zur anderen Führung fördernden Einrichtungen (13) verbunden sind und wobei weiters eine über die gesamte Höhe bis zu einem Ende (19) der obersten Führung (6) reichende, die Behälter fördernde Einrichtung (20) vorgesehen ist.

- 1 -

Gewächshaus

Die Erfindung betrifft ein Gewächshaus mit entlang meanderförmiger Bahnen geführten Behältern zur Aufnahme von sich entwickelnden Organismen.

Es ist aus der AT-PS 254 595 bekannt, die Behälter in ein meanderförmig durch das Gewächshaus über Umlenkrollen geführtes geschlossenes Band einzuhängen und durch Fortbewegen des Bandes durch das Gewächshaus zu bewegen. Das die Behälter aufnehmende Band muß eine große Länge aufweisen und es wird durch das Gewicht aller Behälter hoch belastet (bei streckenweiser Horizontalführung nicht nur auf Zug, sondern auch in Querrichtung). Das Band, die Umlenkrollen und die Antriebsmittel für das Band müssen diesen großen Kräften gewachsen sein, d.h. sie müssen schwer und teuer ausgeführt sein. Wenn das Band reißt, stürzen sämtliche auf dem Band befestigte Behälter ab, so daß der Schaden sehr groß ist. Das Ein- und Aushängen der Behälter ist eine mühsame Arbeit und läßt sich kaum automatisieren. Wenn an einer Aufnahmestelle für einen Behälter eines Bandes kein Behälter eingehängt ist, so wird diese Leerstelle durch das Gewächshaus bewegt, was platzaufwendig ist. Ist das Gewächshaus besonders leicht gebaut, so kann es zu Verformungen des Gewächshauses kommen, wodurch die Bandführung nur mehr ungenau ist.

Die Erfindung bezweckt die Vermeidung dieser Nachteile und Schwierigkeiten und stellt sich die Aufgabe, ein Gewächshaus der eingangs beschriebenen Art zu schaffen, bei dem lange und schwere Bänder bzw. Ketten zur Förde-

1
425

- 2 -

rung der Behälter vermieden werden und bei dem die die Behälter fördernden Einrichtungen sich nur über einen Bruchteil des von den Behältern zurückgelegten Weges erstrecken.

Diese Aufgabe wird dadurch gelöst, daß eine Mehrzahl im vertikalen Abstand voneinander angeordneter, quer zur Höhenerstreckung des Gewächshauses verlaufender ortsfester Führungen für die Behälter vorgesehen ist, wobei die Enden jeweils zweier übereinander angeordneter Führungen mit die Behälter in vertikaler Richtung von einer Führung zur anderen Führung fördernden Einrichtungen verbunden sind und wobei weiters eine über die gesamte Höhe bis zu einem Ende der obersten Führung reichende, die Behälter fördernde Einrichtung vorgesehen ist.

Gemäß einer bevorzugten Ausführungsform sind jeweils zwei übereinander verlaufende Führungen zueinander gegensinnig geneigt.

Dabei ist zwecks automatischen Vorschubs der Behälter längs der Führungen die Neigung der Führungen größer bemessen als der der Reibung zwischen den Behältern und den Führungen entsprechende Reibungswinkel.

Vorteilhaft sind die Führungen als Schienen ausgebildet, entlang derer die Behälter mittels Rollen bewegbar sind.

Eine bevorzugte Ausführungsform ist dadurch gekennzeichnet, daß unmittelbar übereinanderliegende Führungen an ihren voneinander entfernter liegenden Enden mittels Hub-Einrichtungen für die Behälter und das untere Ende der obersten Führung mit dem oberen Ende der untersten Führung mittels einer Senk-Einrichtung für die Behälter verbunden sind, wodurch es möglich ist, die Behälter langsam von der kälteren Zone im unteren Teil des Gewächshauses in die wärmere Zone im oberen Teil des Gewächshauses zu bewegen.

Es ist auch möglich, die unmittelbar übereinanderliegenden Führungen an ihren enger benachbarten Enden mittels Senk-Einrichtungen für die Behälter und das obere Ende der obersten Führung mit dem unteren Ende der untersten Führung mittels einer Hub-Einrichtung für die Behälter zu verbinden.

Zweckmäßig sind die Hub- und Senk-Einrichtungen als über obere und untere Umlenkräder geführte, im wesentlichen sich vertikal erstreckende Ketten ausgebildet, die mit mindestens einem Mitnehmer für die Behälter ausgestattet sind, wobei vorteilhaft die Ketten als Laschenketten und die Mitnehmer als über die Laschen seitlich auskragende Bolzen ausgebildet sind.

Um eine Kollision der Behälter mit den Führungen zu vermeiden, weisen die Führungen an ihren die Behälter an eine Hub-Einrichtung abgebenden Enden ein aufklappbares, den Hubweg eines Behälters freigebendes Endstück auf.

Um ein Abstürzen der Behälter von den Führungen zu vermeiden, weisen die Führungen an ihren die Behälter abgebenden Enden Bremsnasen auf.

Zur Aufgabe der Behälter auf eine Führung ist zu einem Ende der untersten Führung ein Schiebetisch mit einer Horizontalfördereinrichtung gerichtet.

Die Abnahmeder Behälter von einer Führung erfolgt zweckmäßig mittels einer an den Behälter angreifenden und den Behälter von der Führung abhebenden Kurbel.

Nach einer bevorzugten Ausführungsform
- sind die Führungen paarweise an zwei einander gegenüberliegenden Seitenwänden des Gewächshauses angeordnet, wobei jeweils zwei Führungen eines Führungspaares in

- 4 -

gleicher Höhe liegen und zueinander parallel sind,

- sind die Hub- und Senk-Einrichtungen ebenfalls einander paarweise gegenüberliegend an den Seitenwänden des Gewächshauses angeordnet und

- erstrecken sich die Behälter quer über die Breite des Gewächshauses zwischen zwei Führungen eines Führungspaares, wobei an den Enden der Behälter seitlich auskragende, in die Führungen eingreifende Rollen angeordnet sind.

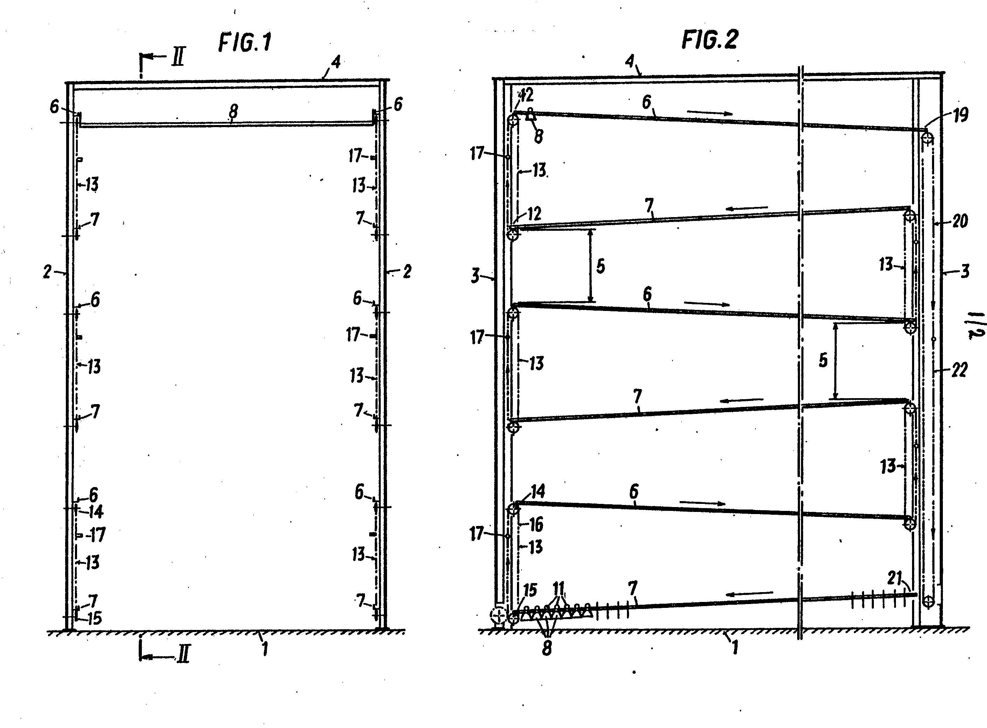

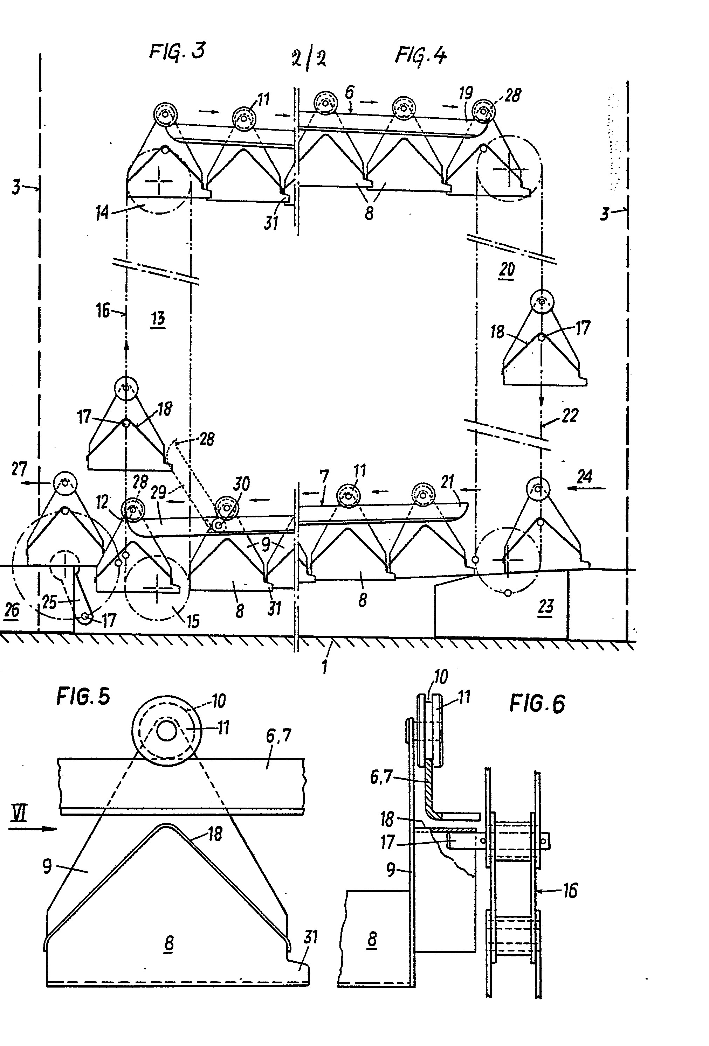

Die Erfindung ist nachfolgend an einem Ausführungsbeispiel anhand der Zeichnung näher erläutert, wobei Fig. 1 einen Querschnitt und Fig. 2 einen Längsschnitt durch ein Gewächshaus gemäß der Linie II-II der Fig. 1 in schematischer Darstellung zeigen. Fig. 3 zeigt ein Detail der Fig. 2 in vergrößertem Maßstab, u.zw. eine Hebe-Einrichtung, und Fig. 4 eine Senk-Einrichtung, ebenfalls in vergrößertem Maßstab. Fig. 5 veranschaulicht eine Seitenansicht eines Behälters, Fig. 6 eine Ansicht des Behälters in Richtung des Pfeiles VI der Fig. 5.

Das Gewächshaus ist von zwei am Fundament 1 aufsitzenden Seitenwänden 2 und zwei Stirnwänden 3 gebildet und von einem Dach 4 nach oben abgeschlossen. Im Inneren des Hauses sind an den Seitenwänden 2 im vertikalen Minimalabstand 5 voneinander angeordnete, als Schienen ausgebildete Führungen 6, 7 angeordnet, wobei jeweils zwei einander gegenüberliegende Führungen 6, 7 zueinander parallel liegen. Sie verlaufen quer zur Höhenerstreckung des Gewächshauses von Stirnwand 3 zu Stirnwand 3. Die an jeder Seitenwand befestigten, unmittelbar übereinander angeordneten Führungen 6, 7 sind jeweils gegensinnig zueinander geneigt, d.h. eine Führung 6 ist nach rechts und die nächste darüber oder darunter liegende Führung 7 nach links geneigt, wie aus Fig. 2 ersichtlich ist.

Die die Organismen aufnehmenden Behälter 8 weisen an ihren Enden Seitenschilder 9 auf, an deren oberen Enden seitlich auskragend jeweils eine eine Nut 10 aufweisende Rolle 11 drehbar gelagert ist. Diese Rolle 11 ist mit ihrer Nut 10 in die Schienen 6, 7 einsetzbar, so daß der Behälter 8 entlang jeweils eines sich in gleicher Höhe befindlichen Schienenpaares quer durch das Gewächshaus bewegt werden kann. Die Neigung der Schienen 6, 7 ist größer bemessen als der der Reibung zwischen den Rollen 11 und den Schienen 6, 7 entsprechende Reibungswinkel, so daß die in die Schienen eingesetzten Behälter selbsttätig entlang der Schienen abwärts rollen. Die Schienen 6, 7 sind an den Seitenwänden der Gehäuse ortsfest montiert, sie können jedoch mittels Stellschrauben etc. in ihre genaue Lage einjustiert werden, was nicht näher dargestellt ist.

Gemäß dem dargestellten Ausführungsbeispiel sind die jeweils voneinander weiter entfernt liegenden Enden 12 der übereinander angeordneten Schienen 6, 7 mittels einer die Behälter vertikal von einer Schiene 7 zur oberhalb liegenden Schiene 6 fördernden Hub-Einrichtung 13 verbunden. Diese Hub-Einrichtung ist als über obere und untere Umlenkräder 14, 15 geführte Laschenkette 16 ausgebildet, die einen seitlich vorstehenden Mitnehmer 17 für die Behälter aufweist. Dieser Mitnehmer 17 kann, wie aus Fig. 6 ersichtlich ist, in einen seitlich der Seitenschilder 9 der Behälter 8 vorragenden dachartigen Vorsprung 18 eingreifen, so daß ein Behälter die Bewegung des Mitnehmers 17 mitmacht, d.h. angehoben wird. Die dachartigen Vorsprünge 18 bewirken eine Versteifung der Seitenschilder 9 der Behälter, was wegen der auskragenden Rollen 11 vorteilhaft ist.

Die Hub-Einrichtungen 13 sind ebenso wie die Schienen 6, 7 paarweise einander gegenüberliegend an den Seitenwänden 2 in gleicher Höhe angeordnet, so daß jeder Behälter an seinen beiden Enden von den Mitnehmern 17 erfaßt wird. Der Antrieb jeweils zweier gegenüberliegender Hub-Einrichtungen 13 erfolgt synchron. Die unteren Enden 19 der obersten Schienen 6 sind mit einer Senk-Einrichtung 20, die in ähnlicher Weise ausgebildet ist wie die Hub-Einrichtungen 13, mit den oberen Enden 21 der untersten Schienen 7 verbunden. Die Senk-Einrichtung 20 ist ebenfalls von zwei an den Seitenwänden 2 angeordneten, einander gegenüberliegenden und synchron angetriebenen Laschenketten 22 gebildet. Dadurch ist es möglich, die von den obersten Schienen 6 abgegebenen Behälter zu den untersten Schienen 7 zu fördern, so daß die Behälter im Kreislauf von unten nach oben ansteigend meanderartig - in Richtung der Pfeile - durch das Gewächshaus geführt sind. Bei jedem Heben eines Behälters läuft das entsprechende Kettenpaar einmal um, was schalttechnisch besonders einfach zu bewerkstelligen ist.

Anstelle der mit Ketten ausgestatteten Hub- und Senk-Einrichtungen 13, 20 könnten auch hydraulisch heb- bzw. senkbare Mitnehmer, die entlang von Kulissen geführt sind, vorgesehen sein.

Mit der Senk-Einrichtung werden die Behälter auf einem Schiebetisch 23 abgesetzt, von dem aus sie mittels einer nicht dargestellten horizontalen Fördereinrichtung, beispielsweise einem hydraulisch betätigten Kolben etc., auf die unterste Schiene in Richtung des Pfeiles 24 aufgeschoben werden können (vgl. Fig. 4). Es wäre jedoch auch denkbar, die Behälter 8 von außen, beispielsweise von einem benachbarten Gewächshaus, in dem andere Klimabedingungen herrschen, auf die untersten Schienen 7 aufzuschieben oder von hier die Behälter 8 entgegengesetzt zum Pfeil 24 zu einem benachbarten Gewächshaus zu verschieben.

- 7 -

Bei den unteren Enden 12 der untersten Schienen 7 sind (vgl. Fig. 3) mit Mitnehmern 17 ausgestattete Kurbeln 25 angeordnet (u.zw. wieder jeweils an den Seitenwänden 2 des Gewächshauses),.die die Behälter 8 von den Schienen 7 abheben und auf einen Auflagetisch 26 setzen, von dem aus die Behälter in Richtung des Pfeiles 27 weitergefördert werden können. Mittels der Kurbeln 25 ist es auch möglich, neue Behälter auf die Mitnehmer 17 der Hub-Einrichtungen 13 aufzusetzen.

Der Auflagetisch 26 kann auch in einen Schiebetisch 23 übergehen, wenn zwei Gewächshäuser aneinander gebaut werden. Dadurch wird es möglich, die Pflanzenzucht in mehreren aufeinanderfolgenden Gewächshäusern mit dem jeweiligen Wachstumsstadium angepaßten klimatischen Verhältnissen zu betreiben, wobei das Umsetzen von einem Gewächshaus in das folgende für jeden Behälter individuell bestimmt und vollautomatisch durchgeführt werden kann.

Alle Schienen 6, 7 weisen jeweils an ihren unteren Enden Bremsnasen 28 auf, die ein ungewolltes Abgleiten der Behälter 8 von diesen Enden verhindern. Wie aus Fig. 3 weiters ersichtlich ist, sind die unteren Endstücke 29 der Schienen 6, 7 um eine Achse 30 aufklappbar - infolge ihres Kontaktes mit dem zu hebenden Behälter 8, u.zw. der dachartigen Vorsprünge 18 mit den Endstücken -, so daß der Weg, den die Behälter während des Hebens zurücklegen, selbsttätig freigegeben wird. Sobald der Behälter 8 nach Erreichen einer gewissen Höhe mit den Endstücken 29 außer Kontakt gelangt, klappen die Endstücke 29 der Schienen 6, 7 wieder in ihre gestreckte, mit den Schienen 6, 7 fluchtende Lage zurück. In der aufgeklappten Lage verhindern die Endstücke 29 ein Nachrollen benachbarter Behälter, so daß der zu hebende Behälter von diesen nicht behindert wird.

- 8 -

Die erfindungsgemäße Konstruktion weist den Vorteil auf, daß sich die Hub- bzw. Senk-Einrichtungen 13, 20 lediglich über einen geringen Teil der Länge des Förderweges erstrecken müssen. Sie können daher klein und leicht dimensioniert sein, und als Antrieb dienen entsprechend schwach ausgelegte Motoren, da stets nur ein einziger Behälter transportiert wird. Die Umlaufzeit der Behälter wird durch Verändern der Taktzeit der Hub- und Senk-Einrichtungen (von Minuten bis Tagen) geregelt. Der Energieverbrauch für den Antrieb der Behälter ist durch die geringe Einschaltzeit des Antriebes sehr gering. Da jede Hub- und Senk-Einrichtung an jeweils einem eigenen Steher der Seitenwände des Gewächshauses befestigbar ist, bleiben Verformungen des Gewächshauses ohne Einfluß auf den Antrieb. Da es möglich ist, die Behälter unmittelbar hintereinander entlang der Schienen zu führen, ergibt sich eine sehr gute Raumausnützung. Der Abstand der Behälter ist durch an den Seitenschildern angeordnete Laschen 31 vorgegeben.

Es ist leicht möglich, durch Verändern der Lage der Schienen bzw. der Hub- und Senk-Einrichtungen das Gewächshaus an unterschiedliche Pflanzensorten anzupassen.

Die Erfindung beschränkt sich nicht auf das in der Zeichnung dargestellte Ausführungsbeispiel, sondern sie kann in verschiedener Weise modifiziert werden. So ist es z.B. möglich, die Behälter zunächst mittels einer Hebe-Einrichtung zu den oberen Enden 12 der obersten Schienen 6 anzuheben und jeweils die enger benachbarten Enden übereinanderliegender Schienen mittels Senk-Einrichtungen zu verbinden. Weiters ist es möglich, die Schienen 6, 7 genau horizontal und parallel zueinander an den Seitenwänden 2 zu befestigen und die Hebe-Einrichtungen 13 so zu gestalten, daß die Behälter nicht nur angehoben werden, sondern nach dem Absetzen auf die Enden der Schienen 6, 7 auch noch ein Stück horizontal gefördert werden. Dies ist beispielsweise durch eine entsprechende Kulissenführung für einen Mitnehmerbolzen erreichbar, oder es kann bei Verwendung einer Kette für die Hub-Einrichtungen die Kette an der oberen Umlenkstelle ein Stück horizontal geführt werden, beispielsweise indem ein zweites oberes Umlenkrad, welches neben dem ersten Umlenkrad 14 liegt, vorgesehen wird.

Patentansprüche:

1. Gewächshaus mit entlang meanderförmiger Bahnen geführten Behältern (8) zur Aufnahme von sich entwickelnden Organismen, dadurch gekennzeichnet, daß eine Mehrzahl im vertikalen Abstand (5) voneinander angeordneter, quer zur Höhenerstreckung des Gewächshauses verlaufender ortsfester Führungen (6, 7) für die Behälter (8) vorgesehen ist, wobei die Enden (12) jeweils zweier übereinander angeordneter Führungen (6, 7) mit die Behälter in vertikaler Richtung von einer Führung zur anderen Führung fördernden Einrichtungen (13) verbunden sind und wobei weiters eine über die gesamte Höhe bis zu einem Ende (19) der obersten Führung (6) reichende, die Behälter fördernde Einrichtung (20) vorgesehen ist.

2. Gewächshaus nach Anspruch 1, dadurch gekennzeichnet, daß jeweils zwei übereinander verlaufende Führungen (6, 7) zueinander gegensinnig geneigt sind.

3. Gewächshaus nach Anspruch 2, dadurch gekennzeichnet, daß die Neigung der Führungen (6, 7) größer bemessen ist als der der Reibung zwischen den Behältern (8) und den Führungen (6, 7) entsprechende Reibungswinkel.

4. Gewächshaus nach den Ansprüchen 1 bis 3, dadurch gekennzeichnet, daß die Führungen als Schienen (6, 7) ausgebildet sind, entlang der die Behälter (8) mittels Rollen (11) bewegbar sind.

5. Gewächshaus nach den Ansprüchen 2 bis 4, dadurch gekennzeichnet, daß unmittelbar übereinanderliegende Führungen an ihren voneinander entfernter liegenden Enden (12) mittels Hub-Einrichtungen (13) für die Behälter (8) und das untere Ende (19) der obersten Führung (6) mit dem oberen Ende (21) der untersten Führung (7) mittels einer Senk-Einrichtung (20) für die Behälter (8) verbunden sind.

6. Gewächshaus nach den Ansprüchen 2 bis 4, dadurch gekennzeichnet, daß unmittelbar übereinanderliegende Führungen (6, 7) an ihren enger benachbarten Enden mittels Senk-Einrichtungen für die Behälter (8) und das obere Ende (12) der obersten Führung (6) mit dem unteren Ende (12) der untersten Führung (7) mittels einer Hub-Einrichtung für die Behälter (8) verbunden sind.

7. Gewächshaus nach den Ansprüchen 5 oder 6, dadurch gekennzeichnet, daß die Hub- und Senk-Einrichtungen (13, 20) als über obere und untere Umlenkräder (14, 15) geführte, im wesentlichen sich vertikal erstreckende Ketten (16, 22) ausgebildet sind, die mit mindestens einem Mitnehmer (17) für die Behälter (8) ausgestattet sind.

8. Gewächshaus nach Anspruch 7, dadurch gekennzeichnet, daß die Ketten als Laschenketten und die Mitnehmer als über die Laschen seitlich auskragende Bolzen (17) ausgebildet sind.

9. Gewächshaus nach den Ansprüchen 5 bis 8, dadurch gekennzeichnet, daß die Führungen (6, 7) an ihren die Behälter (8) an eine Hub-Einrichtung (13) abgebenden Enden (12) ein aufklappbares, den Hubweg eines Behälters freigebendes Endstück (29) aufweisen.

10. Gewächshaus nach den Ansprüchen 1 bis 9, dadurch gekennzeichnet, daß die Führungen an ihren die Behälter abgebenden Enden (12, 19) Bremsnasen (28) aufweisen.

11. Gewächshaus nach den Ansprüchen 1 bis 10, dadurch gekennzeichnet, daß zu einem Ende (21) der untersten Führung (7) ein Schiebetisch (23) mit einer Horizontalfördereinrichtung gerichtet ist.

12. Gewächshaus nach den Ansprüchen 1 bis 11, dadurch gekennzeichnet, daß bei dem die Behälter abgebenden Ende (12) der untersten Führung (7) eine an den Behälter (8) angreifende und den Behälter von der Führung (7) abhebende Kurbel (25) vorgesehen ist.

13. Gewächshaus nach den Ansprüchen 5 bis 12, dadurch gekennzeichnet,
   - daß die Führungen (6, 7) paarweise an zwei einander gegenüberliegenden Seitenwänden (2) des Gewächshauses angeordnet sind, wobei jeweils zwei Führungen (6, 7) eines Führungspaares in gleicher Höhe liegen und zueinander parallel sind,
   - daß die Hub- und Senk-Einrichtungen (13, 20) ebenfalls einander paarweise gegenüberliegend an den Seitenwänden (2) des Gewächshauses angeordnet sind und
   - daß sich die Behälter (8) quer über die Breite des Gewächshauses zwischen zwei Führungen (6, 7) eines Führungspaares erstrecken, wobei an den Enden der Behälter seitlich auskragende, in die Führungen (6, 7) eingreifende Rollen (11) angeordnet sind.

14. Gewächshaus nach den Ansprüchen 5 bis 13, dadurch gekennzeichnet, daß die Behälter (8) mit seitlich zu den Gewächshausseiten (2) hin gerichteten auskragenden dachartigen Vorsprüngen (18) versehen sind, in die Mitnehmer (17) der Hub- und Senk-Einrichtungen (13, 20) eingreifen.

FIG.1

FIG.2

1/2

0060828

FIG. 3    2/2    FIG. 4

FIG. 5    FIG. 6